# EUROPEAN PATENT APPLICATION

(11) **EP 3 549 666 A1**
(43) Date of publication of application: **09.10.2019**
(21) Application number: 17876265.4
(22) Date of filing: 22.11.2017
(51) Int. Cl.: B01J 20/18, B01D 53/04, C04B 41/85, F16L 59/065

(54) **FILTER, GAS ADSORPTION DEVICE USING FILTER, AND VACUUM HEAT INSULATOR**

(30) Priority: 30.11.2016 JP 2016232598
(71) Applicant: Panasonic Intellectual Property Management Co., Ltd., Osaka-shi, Osaka 540-6207 (JP)
(72) Inventor: HASHIDA, Masamichi, Osaka 540-6207 (JP)
(74) Representative: Eisenführ Speiser
(86) International application number: PCT/JP2017/041966
(87) International publication number: WO 2018/101142

(57) **Abstract**

A filter (1) has a primary structure composed of a first material (2) with a relatively high melting point; a secondary structure composed of a second material (3) with a lower melting point than the first material (2); and voids. This configuration provides the filter (1) with controllable breathability. A gas-adsorption device including the filter (1) can control the gas permeability rate. A vacuum insulation material including the gas-adsorption device enables the gas adsorber to selectively adsorb non-condensable gas from water-vapor-containing gas. As a result, the vacuum insulation material can be maintained at low pressure for a long period of time, thereby maintaining high insulation performance.

## Description

### TECHNICAL FIELD

The present disclosure relates to a filter with controllable breathability, and a gas-adsorption device that includes the filter and a gas adsorber for adsorbing, at or below atmospheric pressure, gas infiltrated through the filter. The present disclosure further relates to a vacuum insulation material that includes the gas-adsorption device.

### BACKGROUND ART

Energy conservation has been intensively studied to prevent global warming in recent years, and insulation materials with excellent insulation performance are being developed as a measure of energy conservation.

Among insulation materials, vacuum insulation materials have most excellent insulation performance and are expected to further improve their performance because of their wide-ranging applications.

Vacuum insulation materials eliminate as much internal gas as possible to reduce gas thermal conduction, thereby exhibiting excellent insulation performance. The insulation performance can be improved by reducing the internal pressure to reduce the gas thermal conduction caused by molecular collision.

However, the degree of vacuum practically achievable at an industrial level is only 10 Pa or so. Another disadvantage is that the insulation performance can be deteriorated over time by gases generated inside the vacuum insulation materials or gaseous components infiltrated into the materials over time. To cope with these situations, it has been expected to develop gas adsorbers capable of adsorbing gas at or below atmospheric pressure.

A typical vacuum insulation material has a plastic laminated film as its covering material. The covering material makes the vacuum insulation material have higher gas permeability under hot and humid conditions, causing more non-condensable gases and more water-vapor-containing gaseous components to infiltrate into the material over time. This accelerates the deterioration of the insulation performance over time.

The gaseous components can be effectively adsorbed and eliminated by providing the covering material with a gas adsorber. However, the gas adsorber adsorbs water vapor more easily than non-condensable gas. Thus, the gas adsorber adsorbs water vapor contained in gas, deteriorating its gas adsorption performance.

One approach to this problem is to cover a gas adsorber made of Ba-Li alloy with desiccant so that the gas adsorber can adsorb non-condensable gas selectively (e.g., PTL 1).

Another approach is to provide a partition made of contiguous pores between a gas adsorber and a water adsorber so that gas can pass through the water adsorber and the partition before being adsorbed by the gas adsorber. This enables the gas adsorber to adsorb gas containing less water (e.g., PTL 2).

Still another approach is to use a filter produced by mixing ceramic with lead wire, pressure-molding the mixture, and sintering it at high temperature (e.g., PTL 3).

### Citation List

### Patent Literature

PTL 1: Japanese Translation of PCT International Application Publication No. 9-512088
PTL 2: Japanese Unexamined Patent Application Publication No. 2009-78261
PTL 3: Japanese Unexamined Patent Application Publication No. 2-68106

### SUMMARY

In PTL 1, the desiccant is produced by pressure-molding powder, but the breathability has not been reduced to a sufficient level. As a result, this may cause water-vapor-containing gas to reach the gas adsorber, making the gas adsorber unable to demonstrate its ability.

In PTL 2, the gas-adsorption device allows gas that has passed through the water adsorber to reach the gas adsorber through the partition. However, part of the gas could undesirably reach the gas adsorber through the gap between the partition and the low-gas-permeable container.

In PTL 3, the filter has variations in void ratio because it is made of a mixture of ceramic with lead wire, thereby causing variations in breathability. For this reason, using this filter as the desiccant shown in PTL 1 could not fully control the adsorption rate of the gas adsorber. Another problem is the use of lead, which is an environmental load substance.

To solve these conventional problems, the present disclosure provides a filter having the following features. The filter contains a gas adsorber for adsorbing non-condensable gas with a fully reduced water-vapor content. Thus, the filter can perform its optimum function even when the gaseous components in the covering material of the filter contain water vapor. Furthermore, the filter does not contain environmental load substances. The present disclosure further provides a gas-adsorption device including such a filter, and also provides a vacuum insulation material.

The filter of the present disclosure has a primary structure comprising a first material, a secondary structure comprising a second material with a lower melting point than a melting point of the first material, and voids.

The gas-adsorption device of the present disclosure includes a gas adsorber; a low-gas-permeable container; and the above-described filter. The gas adsorber is located in a closed space defined by the low-gas-permeable container and the filter. The closed space is ventilated through the filter.

The vacuum insulation material of the present disclosure includes a core material; a covering material; the above-described gas-adsorption device; and a water adsorber. The core material and the gas-adsorption device are sealed in the covering material under reduced pressure.

The filter of the present disclosure has breathability (the size of the voids) easily controllable by changing the degree of filling the voids with the secondary structure composed of the material with the relatively low melting point.

The gas-adsorption device includes the filter with controllable breathability, thereby being able to control the time required for gas adsorption.

The vacuum insulation material contains the water adsorber in the covering material. Even when the gas with a high water vapor content infiltrates into the covering material, the water adsorber adsorbs the water vapor, allowing the gas adsorber to adsorb gas with a low water content. In this case, the filter can reduce the rate at which the gas adsorber in the gas-adsorption device adsorbs gas. This enables the gas adsorber to adsorb gas after the water adsorber adsorbs the water contained in the gas. In other words, the water-vapor-containing gas is made to stay for a long period of time outside the gas-adsorption device. This enables the gas-adsorption device to adsorb gas after the water adsorber significantly reduces the water in the gas.

When used under hot and humid conditions, the vacuum insulation material is likely to be subjected to external gas with a high water vapor content. Even in such cases, the water adsorber prevents the gas adsorber from adsorbing water vapor and enables the gas adsorber to adsorb a large amount of gas. Thus, the vacuum insulation material has little changes in internal pressure, and hence, in insulation performance for a long period of time.

As described above, the present disclosure provides a filter with controllable breathability and also provides a gas-adsorption device that includes the filter to control the gas permeability rate. The present disclosure also provides a vacuum insulation material that includes the gas-adsorption device. In the vacuum insulation material, the gas adsorber can adsorb non-condensable gas selectively even when the gas contains water vapor. As a result, the vacuum insulation material can maintain a low internal pressure and insulation performance for a long time of period.

### BRIEF DESCRIPTION OF DRAWINGS

FIG. 1 is a schematic diagram of a filter according to a first exemplary embodiment of the present disclosure.
FIG. 2 is a schematic diagram of a filter according to a second exemplary embodiment of the present disclosure.
FIG. 3 is a cross-sectional schematic diagram of a gas-adsorption device, which includes the filter, according to a third exemplary embodiment of the present disclosure.
FIG. 4 is a cross-sectional schematic diagram of a vacuum insulation material, which includes the gas-adsorption device, according to a fourth exemplary embodiment of the present disclosure.

### DESCRIPTION OF EMBODIMENTS

### Aspects of the Present Disclosure

The first aspect of the present disclosure is a filter having a primary structure comprising a first material, a secondary structure composed of a second material with a lower melting point than a melting point of the first material, and voids.

When the filter contains two or more types of materials with different melting points, the secondary structure comprises one or more types of materials with a relatively low melting point and is formed in voids around the primary structure. The ratio of the voids to the primary structure can be changed by changing the degree of the secondary structure occupying the voids. The breathability of the filter increases (or decreases) with increasing (or decreasing) the percentage of the voids.

In general, when thermoplastic material powder is molded, the size of the voids in the molded product depends on the temperature at which the molded powder is heat-treated. When the heat treatment temperature is low, the voids are large because the voids do not reduce in size very much after the powder molded at room temperature. Meanwhile, the voids decreases in size with increasing temperatures. This phenomenon can be used to determine the size of the voids in the filter by controlling the heat treatment temperature.

In controlling low breathability (allowing only a few voids to remain), a heat treatment temperature even slightly higher than the optimum temperature might eliminate the voids entirely. Therefore, it is generally difficult to control low breathability by controlling the heat treatment temperature.

On the other hand, the filter of the present disclosure can easily control low breathability (the size of the voids) by controlling the degree of the secondary structure occupying the voids.

The filter of the present disclosure is a porous body containing contiguous voids, and the air flow of the filter per unit time decreases when the gas or liquid in the filter is subjected to a pressure.

In the second aspect, at least one of the first and second materials of the filter of the first aspect is ceramic.

Thus, the filter, in which at least one of the material with the relatively high melting point and the material with the relatively low melting point is ceramic, can be used in applications requiring high resistance to heat.

The ceramic used in the present disclosure can be an oxide of metal, silicon, or other materials regardless its shape and size. It can also be in bulk or powder form.

In the third aspect, the second material of the first or second aspect contains at least one of silicon oxide, bismuth oxide, and boron oxide.

These oxides have high melting points, so that the first material with the relatively high melting point has a far higher melting point. As a result, the filter can be used in applications requiring high resistance to heat.

The fourth aspect is a gas-adsorption device including a gas adsorber, a low-gas-permeable container, and the filter of any one of the first to third aspects. The gas adsorber is located in the closed space defined by the low-gas-permeable container and the filter. The closed space is ventilated through the filter.

Thus, the filter is used to ventilate the closed space, so that the breathability of the filter can be controlled to control the amount of gas adsorbed by the gas adsorber per unit time.

In the fifth aspect, the gas adsorber of the fourth aspect contains copper ion-exchanged ZSM-5 zeolite.

Copper ion-exchanged ZSM-5 zeolite is a gas adsorber with an activity high enough to adsorb nitrogen, which is an inert gas. Thus, this zeolite advantageously has a high gas adsorption capacity per unit weight, but disadvantageously has a gas adsorption rate high enough to adsorb gas in a few seconds when coming into contact with the atmosphere, and entirely loses its adsorption ability.

Other types of gas adsorbers such as Ba-Li alloy systems have adsorption rates low enough to prevent a large sudden decrease in adsorption ability when coming into contact with the atmosphere. Meanwhile, they have a low amount of adsorption of not-easily-adsorbable nitrogen per unit weight.

On the other hand, the gas-adsorption device of the present disclosure is ventilated through the filter. The enables the breathability of the filter to be controlled to control the amount of gas adsorbed per unit time by copper ion-exchanged ZSM-5 zeolite with a high adsorption rate.

Thus, the gas adsorption rate can be low even when the gas-adsorption device is in contact with the atmosphere. Hence, the gas-adsorption device has a high adsorption capacity of not-easily-adsorbable gas per unit weight when coming onto contact with the atmosphere.

The six aspect is a vacuum insulation material including a core material; a covering material; the gas-adsorption device of the fourth or fifth aspect; and a water adsorber. The core material and the gas-adsorption device are sealed in the covering material under reduced pressure.

The vacuum insulation material becomes increasingly vulnerable over time to the infiltration of non-condensable gas and water vapor in the atmosphere. In general, water vapor is more easily adsorbed than non-condensable gas, causing the gas adsorber to adsorb too much water and to reduce its adsorption ability. However, this problem can be alleviated to some extent by previously disposing the water adsorber in the covering material so as to adsorb water before the gas adsorber does.

As described so far, according to the present disclosure, the gas adsorber adsorbs gas through the filter of the gas-adsorption device. This can control (e.g., reduce) the rate at which the gas adsorber adsorbs gas, thereby saving the time it takes the water adsorber to adsorb water. As a result, the water-vapor-containing gas is made to stay for a long period of time outside the gas-adsorption device. This enables the gas-adsorption device to adsorb gas after the water adsorber significantly reduces the water in the gas. Thus, the gas adsorber is prevented from adsorbing too much water and can maintain its gas adsorption ability.

Therefore, the vacuum insulation material can maintain its thermal conductivity for a long period of time.

The exemplary embodiments of the present disclosure will be described with reference to the drawings. Note that the present disclosure is not limited to these exemplary embodiments.

### FIRST EXEMPLARY EMBODIMENT

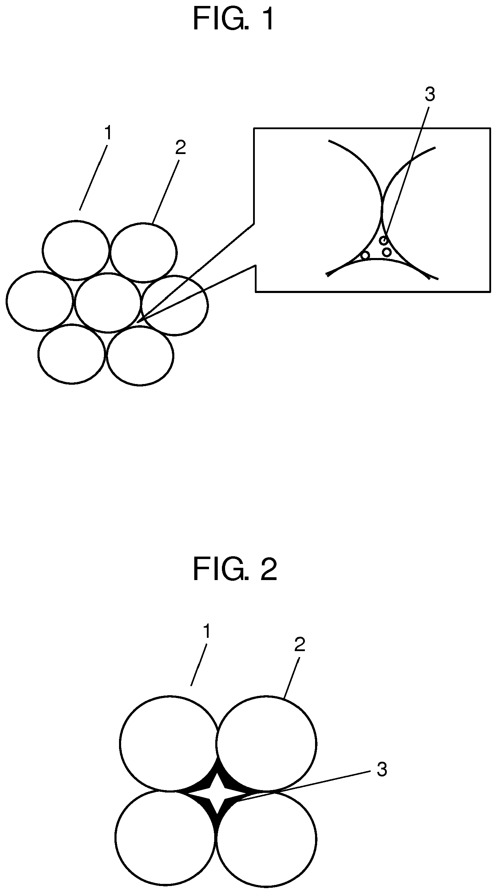

FIG. 1 is a schematic diagram of a filter according to a first exemplary embodiment of the present disclosure.

In FIG. 1, filter 1 is a porous body having voids contiguous at least in the direction perpendicular to the plane of FIG. 1. Filter 1 has a primary structure composed of material 2 (also referred to as the first material) with a relatively high melting point. Filter 1 further has material 3 (also referred to as the second material) with a relatively low melting point, which is held in voids around the primary structure.

The filter of the present disclosure can be fabricated as follows.

First, material 2 with the relatively high melting point, for example, alumina powder, is molded by a well-known method. To be more specific, the alumina powder is injected into a cylindrical mold and uniaxially molded. The molded product is heat-treated. These steps produce the primary structure, which is composed of material 2 with the relatively high melting point and has voids around it.

Next, the voids around the primary structure composed of material 2 are impregnated with a liquid material at least containing material 3. The liquid material can be, for example, colloidal silica obtained by dispersing microparticulate silica in water. The primary structure composed of material 2 is heat-treated. The heat treatment removes the liquid components from the liquid material at least containing material 3. As a result, the obtained filter contains material 3 outside the primary structure composed of material 2.

Note that material 2 with the relatively high melting point, which is used as the starting material, is not limited to alumina. Similarly, material 3 with the relatively low melting point is not limited to silica.

The process of molding the primary structure composed of material 2 is not limited to heat treatment; it is alternatively possible to use an organic or inorganic binder.

The powder of material 2 is not limited in shape, but preferably has a small aspect ratio and particularly preferably has an approximately spherical shape. The small aspect ratio means that when the size of a material is expressed by three axes (e.g., X, Y, and Z axes), the length of one axis is not extremely different from those of the other axes.

Similarly, the powder of material 3-is not limited in shape, but preferably has a small aspect ratio, and particularly preferably has an approximately spherical shape. It is further preferable that the size (the diameter in the case of a sphere) of material 3 be much smaller than the size of the voids around the primary structure composed of material 2.

The liquid components can be removed from the liquid material containing material 3 by, for example, decompression instead of the above-mentioned treatment.

The percentage of material 3 remaining in the voids around the primary structure composed of material 2 can be controlled by controlling the ratio of the liquid components to the solid components in the liquid material.

It is impossible to define the melting point of silica, which is not crystalline; however, its softening temperature may be treated as the melting point for the sake of convenience.

The primary structure is composed of material 2 whose particles are connected to each other. Thus, the primary structure can exist alone with a definite shape.

Meanwhile, in the secondary structure, the particles of material 3 do not necessarily have to be connected to each other. The particles of material 3 are located relative to each other in the voids around the primary structure.

The difference in melting point between material 2 and material 3 is not limited, but may preferably be much larger than industrially-controllable variations caused by the heat treatment device used to produce the filter. Regardless of whether the filter is placed in the heat treatment device at the region with the highest temperature or at the region with the lowest temperature, the heat treatment temperature can be higher than the melting point of material 3 and lower than that of material 2. As a result, material 3 can be melted alone.

### SECOND EXEMPLARY EMBODIMENT

FIG. 2 is a schematic diagram of filter 1 according to a second exemplary embodiment of the present disclosure.

In FIG. 2, filter 1 is a porous body having voids contiguous at least in the direction perpendicular to the plane of FIG. 2. Material 2 with a relatively high melting point composes a primary structure. Material 3 with a relatively low melting point is held in voids around the primary structure.

Filter 1 of the present exemplary embodiment can be obtained as follows.

First, material 2 (e.g., alumina powder) is mixed with material 3 (e.g., borosilicate glass powder) by a well-known method. The resultant mixture is molded by a well-known method. To be more specific, the mixture is injected into a cylindrical mold and uniaxially molded. The molded product is heat-treated to obtain filter 1 including material 2, which composes a primary structure, and material 3, which is held in voids around the primary structure.

Material 2 and material 3 both in powder form are preferably approximately spheres and have a uniform particle size distribution.

The mechanism that filter 1 with controllable breathability can be obtained by the above-mentioned process will be described as follows.

Assume that large and approximately spherical particles (material 2) and small particles (material 3) both in powder form are pressure molded. In this case, large particles are approximately closest-packed (the volume percentage of the spheres is 74%). The small particles are held in voids around the large particles.

The molded powder is heated at a temperature higher than the melting point of material 3 and lower than the melting point of material 2. As a result, the particles of material 2 remain in approximately the same arrangement, and the particles of material 3 alone are melted. After this, the capillary phenomenon causes the particles of material 3 to flow into between the particles of material 2 that are in contact with each other and to settle into a stable state. The regions having neither material 2 or material 3 function as the ventilation channels of filter 1.

The volume percentage of material 2 can be continuously changed, to control the breathability, from 0% to 26% at which the particles of material 2 are closest-packed and no voids are left.

The particle size of the spheres inscribed in the voids is only about 1/8 of that of material 2 when its particles are closest-packed. The particle size larger than this would disorder the arrangement of the particles of material 2 that are closest-packed. Therefore, the particle size of material 3 is preferably 1/8 or less of that of material 2.

### THIRD EXEMPLARY EMBODIMENT

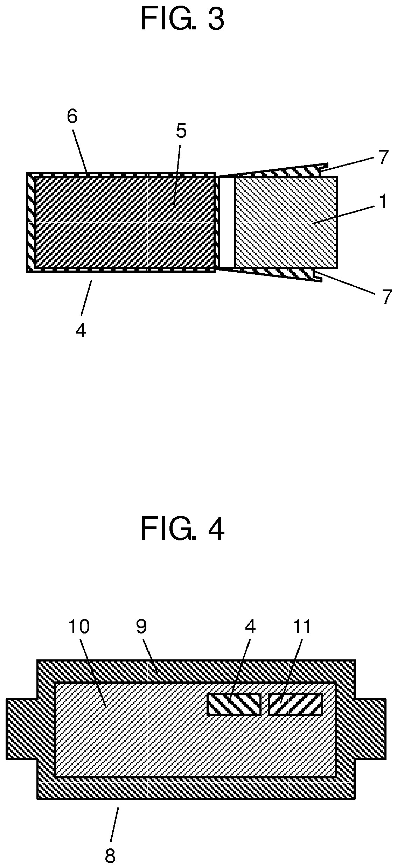

FIG. 3 is a cross-sectional schematic diagram of gas-adsorption device 4, which includes filter 1, according to a third exemplary embodiment of the present disclosure.

In FIG. 3, gas-adsorption device 4 includes filter 1; gas adsorber 5 composed of copper ion-exchanged ZSM-5 zeolite; low-gas-permeable container 6; and sealing glass 7. Filter 1 is the same as that used in the first or second exemplary embodiment.

Gas-adsorption device 4 of the present disclosure can be obtained as follows.

First, low-gas-permeable container 6 gets filled with copper ion-exchanged ZSM-5 zeolite, which is gas adsorber 5.

Next, filter 1 gets located in low-gas-permeable container 6 with its flared opening at the top as shown in FIG. 3.

The opening of container 6 is larger in diameter than filter 1 at the end position, becomes smaller with distance from the end position, and is smaller than filter 1 in the region opposite to the end position. Therefore, filter 1 moves downward by gravitation and is fixed at a region where the opening of container 6 is equal or similar in diameter to filter 1.

Filter 1 is spaced from container 6 by gaps where sealing glass 7 is located. Next, container 6 equipped with them is placed in a vacuum furnace. Container 6 is decompressed in the furnace, heated to the activation temperature of gas adsorber 5, and is further heated to a temperature higher by 100°C than the melting point of sealing glass 7 (the temperature at which sealing glass 7 begins to flow by its own weight).

Sealing glass 7 flows into the gaps between filter 1 and container 6 by the capillary phenomenon and seals the gaps. Sealing glass 7 is then cooled and solidified, thereby achieving gas-adsorption device 4.

Low gas permeable container 6 may be made of any material, such as metal, ceramic, and glass that can resist temperatures higher than the heat treatment temperature at which device 4 is produced.

Similarly, the material of sealing glass 7 is not limited, but is preferably a material having a thermal expansion coefficient similar to that of container 6, such as borosilicate glass, phosphate glass, and bismuth oxide glass.

Gas-adsorption device 4 of the present disclosure adsorbs air in the atmosphere little by little. Therefore, when stored for a long period of time, device 4 is preferably sealed with a laminated film having gas-barrier properties under reduced pressure. Device 4 can be opened when used to produce a vacuum insulation material, or in other occasions to adsorb gas.

### FOURTH EXEMPLARY EMBODIMENT

FIG. 4 is a cross-sectional schematic diagram of vacuum insulation material 8, which has gas-adsorption device 4, according to a fourth exemplary embodiment of the present disclosure.

In FIG. 4, vacuum insulation material 8 contains covering material 9 having core material 10; gas-adsorption device 4; and water adsorber 11. Gas-adsorption device 4 includes filter 1; gas adsorber 5 composed of copper ion-exchanged ZSM-5 zeolite; low-gas-permeable container 6; and sealing glass 7.

Filter 1 is the same as that used in the first or second exemplary embodiment. Material 2 with a relatively high melting point composes a primary structure. Material 3 with a relatively low melting point is held in voids around the primary structure.

Vacuum insulation material 8 of the present disclosure can be obtained as follows.

First, core material 10 is put in three-edge-sealed covering material 9 through its opening in the atmosphere. Next, gas-adsorption device 4 and water adsorber 11 are put in material 9. Next, material 9 is placed in a vacuum chamber and the periphery of material 9 is decompressed.

As a result, gas is removed from material 9, and the opening of material 9 is heat-sealed under reduced pressure. After this, gas is introduced into the vacuum chamber, and material 9 is taken out to the atmosphere to achieve vacuum insulation material 8.

Material 8 produced as above can maintain its thermal conductivity for a long period of time under hot and humid conditions because of the following mechanism.

The gas permeability and water vapor permeability of covering material 9 are generally higher under hot and humid conditions. The atmosphere contains much more water vapor under humid condition, allowing more water vapor to infiltrate through material 9. This increases the absolute amount of water vapor infiltrating into material 9.

Gas-adsorption device 4 includes filter 1 whose breathability is kept under control. Filter 1 reduces the rate at which device 4 adsorbs non-condensable gas and water vapor from outside it. This low rate allows water adsorber 11 located in covering material 9 to adsorb and reduce the water vapor in material 9. As a result, the gas adsorbed by gas adsorber 5 through filter 1 contains little water vapor. This allows gas adsorber 5 to fully demonstrate its gas adsorption ability, thereby continuing to adsorb infiltrated gas for a long period of time and maintaining its thermal conductivity.

The copper ion-exchanged ZSM-5 zeolite used in the present disclosure is ZSM-5 zeolite that contains copper as cations in pores.

Copper ion exchange can be performed by a well-known method. A typical approach is to immerse ZSM-5 zeolite in an aqueous solution of a copper soluble salt, such as an aqueous solution of copper chloride or copper ammine. In particular, those prepared using a Cu2⁺ solution containing carboxylate, such as copper propionate (II) or copper acetate (II), have high nitrogen adsorption ability.

Gas adsorber 5 can be obtained by heat-treating copper ion-exchanged ZSM-5 zeolite under reduced pressure. This treatment is performed to reduce the Cu2⁺, which is introduced by ion exchange, to Cu+ so that the zeolite can exhibit its nitrogen adsorption ability.

Covering material 9 can be any material that partitions between the inside and outside of vacuum insulation material 8. Specific examples of material 9 include those with excellent gas-barrier properties, such as plastic containers, metal containers, and laminated films.

When material 9 is made of a laminated film, the structure can be, for example, as follows.

The innermost layer of the film as the heat-seal layer can be made of any of the following materials: low-density polyethylene, linear low-density polyethylene, high-density polyethylene, casted polypropylene, polyacrylonitrile, casted polyethylene terephthalate, casted nylon, and casted ethylene-polyvinyl alcohol copolymer resin.

In order to reduce gas infiltration from outside, it is possible to use metal foil, deposited film, coating film, or the like. The type and number of laminated layers are not specified.

Specific examples of the metal foil include aluminum, stainless steel, iron, and their mixtures.

The deposition and coating can use any of the following plastic films for its base: polyethylene terephthalate, ethylene-polyvinyl alcohol copolymer resin, polyethylene naphthalate, nylon, polypropylene, polyamide, and polyimide.

The deposition can be performed using any of the following materials: aluminum, cobalt, nickel, zinc, copper, silver, Si-Al, diamond-like carbon, and their mixtures.

The coating can be performed using polyvinyl alcohol (PVA), polyacrylic acid resin, and their mixtures.

It is possible to provide an additional film to at least one of the outer layer and a middle layer in order to improve pinhole resistance, abrasion resistance, and barrier properties, and to provide flame retardance.

The additional film provided to at least one of the outer layer and a middle layer can be any of the following materials: nylon, ethylene-tetrafluoroethylene copolymer resin, polyethylene terephthalate, polyethylene naphthalate, polypropylene, and ethylene-polyvinyl alcohol copolymer resin. The type and number of laminated layers are not limited.

Core material 10 of the present disclosure is used to maintain the shape of vacuum insulation material 8 against the atmospheric pressure. Material 10 can be any material that has a high percentage of voids, such as fiber, powder, foamed resin, porous body, and thin film laminated body.

Specific examples of the fiber include glass wool, glass fiber, alumina fiber, silica-alumina fiber, silica fiber, rock wool, and silicon carbide fiber. Specific examples of the powder include silica, perlite, and carbon black. Specific examples of the foamed resin include urethane foam, phenolic foam, and styrene foam. In addition, their mixtures and compacts can be used.

Water adsorber 11 can be any material that adsorbs water contained in gas, such as activated carbon, silica gel, and calcium oxide. The shape of the water adsorber is not limited and can be, for example, granular or pellet. The water adsorber is preferably in powder form because it has a large surface area per unit weight and can adsorb ambient water more quickly.

The present disclosure will now be described in more detail in the following examples.

### EXAMPLES

### FIRST EXAMPLE

Alumina powder with an average particle size of 10 µm, which is used as material 2 with a relatively high melting point, is injected into a cylindrical mold with a diameter of 5.5 mm. The injected powder is pressure molded with a weight of 100 kg, and then heat-treated at 1500°C for an hour, thereby producing a primary structure.

The obtained primary structure is immersed in colloidal silica with an average particle size of 10 nm and a solid content of 5% and is left for one hour to allow the colloidal silica to be adsorbed in voids around the primary structure. The primary structure is taken out of the colloidal silica and is placed in a drying furnace at 100°C for an hour. As a result, the dispersion medium of the colloidal silica evaporates, making silica powder remain in the voids around the primary structure.

The resulting cylindrical filter 1 is 5.45 mm in diameter and 4.1 mm in length. While one end of filter 1 is kept at 2 atm and the other end at 1 atm, its air flow rate is measured and found to be 0.2 ml/min.

### SECOND EXAMPLE

Filter 1 of Second Example is produced in the same manner as in First Example except that the solid content of colloidal silica is set to 10%. The air flow rate of filter 1 is measured and found to be 0.1 ml/min. The reason for this result is considered that filter 1 of Second Example has more silica powder remaining in regions other than the primary structure, thereby becoming less breathable than filter 1 of First Example.

### THIRD EXAMPLE

Alumina powder with an average particle size of 50 µm is prepared as material 2 with a relatively high melting point. Polypropylene powder with an average particle size of 5 µm is prepared as material 3 with a relatively low melting point. These powders are mixed in a volume ratio of 80:10, and the resulting mixture is injected into a cylindrical mold with a diameter of 5.5 mm. The injected mixture is pressure molded with a weight of 100 kg, and then heat-treated at 180°C for an hour, thereby producing filter 1 of Third Example.

The resulting cylindrical filter 1 is 5.45 mm in diameter and 4.07 mm in length. While one end of filter 1 is kept at 2 atm and the other end at 1 atm, its air flow rate is measured and found to be 0.08 ml/min.

### FOURTH EXAMPLE

Alumina powder with an average particle size of 20 µm is prepared as material 2 with a relatively high melting point. Borosilicate glass powder with an average particle size of 2 µm and a softening temperature of 500°C is prepared as material 3 with a relatively low melting point. These powders are mixed in a volume ratio of 80:10, and the resulting mixture is injected into a cylindrical mold with a diameter of 5.5 mm. The injected mixture is pressure molded with a weight of 100 kg, and then heat-treated at 800°C for an hour, thereby producing filter 1 of Fourth Example.

The resulting cylindrical filter 1 is 5.47 mm in diameter and 4.11 mm in length. While one end of filter 1 is kept at 2 atm and the other end at 1 atm, its air flow rate is measured and found to be 0.05 ml/min.

Filter 1 of Fourth Example is less breathable than filter 1 of Third Example. The reason for this result is considered that both materials 2 and 3 have smaller particle size and make the voids smaller than in Third Example.

Filter 1 of Fourth Example is evaluated for breathability after being heat-treated at 450°C for 1000 hours, and no changes are observed. This reveals that excellent heat resistance can be achieved by using borosilicate glass as material 3.

### FIFTH EXAMPLE

A filter of Fifth Example is produced in the same manner as in Forth Example except that material 2 and material 3 are mixed in a volume ratio of 85:15.

The resulting cylindrical filter is 5.47 mm in diameter and 4.15 mm in length. While one end of filter 1 is kept at 2 atm and the other end at 1 atm, its air flow rate is measured and found to be 0.02 ml/min.

The reason for this result is considered that the filter of Fourth Example has more borosilicate glass remaining in voids around the primary structure, thereby becoming less breathable than filter 1 of Fourth Example.

### SIXTH EXAMPLE

Vacuum insulation material 8 of Sixth Example is produced by the method shown in the fourth exemplary embodiment by using gas-adsorption device 4 containing glass wool plate as the core material, calcium oxide as the water adsorber, and aluminum deposition film as the covering material.

The aluminum deposition film is a lamination of the following materials: 50-µm-thick low-density polyethylene, 12-µm-thick PET aluminum deposition film, and 25-µm-thick nylon film. Gas-adsorption device 4 is produced by the method shown in the third exemplary embodiment by using the following materials: the same filter 1 as in Third Example; 0.2-mm-thick cylindrical aluminum-foil container as the low-gas-permeable container; ZSM-5 zeolite as the gas adsorber; and borosilicate glass with a softening temperature of 500°C as the sealing glass. In these processes of producing vacuum insulation material 8, the time required to handle gas-adsorption device 4 in the atmosphere is 30 minutes.

Material 8 thus obtained is subjected to an acceleration test under hot condition and is measured for thermal conductivity. The measurement result indicates that the thermal conductivity can remain virtually unchanged for 20 years.

This result reveals that ZSM-5 zeolite can maintain its gas adsorption ability while being treated for 30 minutes in the atmosphere.

Another vacuum insulation material 8 is produced under the same conditions as in the present example and is left for 10 days at a temperature of 40°C and a humidity of 90%. Material 8 is measured for thermal conductivity before and after the 10-day storage, and no significant increases are observed. Material 8 is then subjected to an acceleration test under hot condition and is measured for thermal conductivity. The measurement result indicates that the thermal conductivity can remain virtually unchanged for 20 years.

This result reveals that even after material 8 is left for 10 days at a temperature of 40°C and a humidity of 90%, the gas adsorber does not lose its gas adsorption ability, which could be caused by adsorbing water vapor.

The reason for this result is considered as follows. Filter 1 of the present example has low breathability, allowing the water adsorber to adsorb the water vapor infiltrated into the covering material. As a result, the gas adsorber adsorbs air not containing water vapor.

### SEVENTH EXAMPLE

Vacuum insulation material 8 of Seventh Example is produced in the same manner as in Sixth Example except that the gas adsorber is copper ion-exchanged ZSM-5 zeolite.

Material 8 thus obtained is subjected to an acceleration test under hot condition and is measured for thermal conductivity. The measurement result indicates that the thermal conductivity can remain virtually unchanged for 50 years.

This result reveals that copper ion-exchanged ZSM-5 zeolite with a high adsorption rate can maintain its gas adsorption ability while being treated for 30 minutes in the atmosphere.

Another vacuum insulation material 8 is produced under the same conditions as in the present example and is left for 100 days at a temperature of 40°C and a humidity of 90%. Material 8 is measured for thermal conductivity before and after the 100-day storage, and no significant increases are observed. Material 8 is then subjected to an acceleration test under hot condition and is measured for thermal conductivity. The measurement result indicates that the thermal conductivity can remain virtually unchanged for 50 years. This result reveals that even after material 8 is left for 100 days at a temperature of 40°C and a humidity of 90%, the gas adsorber does not lose its gas adsorption ability, which could be caused by adsorbing water vapor.

The reason for this result is considered as follows. Filter 1 of the present example has low breathability, allowing the water adsorber to adsorb the water vapor infiltrated into the covering material. As a result, the gas adsorber adsorbs air not containing water vapor.

The conditions of the temperature of 40°C and the humidity of 90% correspond to hot and humid climatic regions. The gas adsorber maintains its gas adsorption ability even after being left for 100 days under such conditions. Therefore, the gas adsorber is considered to be able to maintain the thermal conductivity for a long period of time when used in houses in hot and humid climatic regions.

### COMPARATIVE EXAMPLE 1

Filter 1 of Comparative Example 1 is produced as follows. Alumina powder with a diameter of 10 µm is injected into a cylindrical mold with a diameter of 5.5 mm, is pressure molded, and is heat-treated at 1500°C.

The resulting cylindrical filter 1 is 5.05 mm in diameter and 3.9 mm in length. While one end of filter 1 is kept at 2 atm and the other end at 1 atm, its breathability is measured and found to be 3.7 ml/min.

Vacuum insulation material 8 is produced under the same conditions as in Sixth Example except for using this filter 1, and is subjected to the same test as in Sixth Example.

Material 8 subjected to an acceleration test under hot condition is measured for thermal conductivity. The measurement result indicates that the thermal conductivity can remain virtually unchanged for 50 years.

Another vacuum insulation material is produced under the same conditions as in the present example and is left for 10 days at a temperature of 40°C and a humidity of 90%. The material is measured for thermal conductivity before and after the 10-day storage, and no significant increases are observed. The material is then subjected to an acceleration test under hot condition and is measured for thermal conductivity. The measurement result indicates that the thermal conductivity can remain virtually unchanged for 10 years. This results reveals that the adsorption ability of the gas-adsorption device is reduced to 20%.

The reason for this result is considered as follows. The breathability of filter 1 is too high to save the time it takes the water adsorber to fully adsorb the water vapor infiltrated into the covering material. As a result, the gas adsorber adsorbs both gas and water vapor, thereby losing its gas adsorption ability.

### COMPARATIVE EXAMPLE 2

Filter 1 of Comparative Example 2 is produced in the same manner as in Comparative Example 1 except that the heat treatment temperature is set to 1550°C. This filter 1 is measured for breathability and found to be 0 ml/min.

In Comparative Example 1, the breathability is 3.7 mm/min when the heat treatment temperature is 1500°C. It has turned out that a slight increase in the heat treatment temperature greatly changes the breathability. This result reveals that the breathability cannot be controlled by optimizing the heat treatment temperature.

### COMPARATIVE EXAMPLE 3

Vacuum insulation material 8 of Comparative Example 3 is produced in the same manner as in Seventh Example except that gas-adsorption device 4 does not include filter 1.

Material 8 thus obtained is subjected to an acceleration test under hot condition and is measured for thermal conductivity. The measurement result reveals that material 8 cannot maintain its thermal conductivity. This result reveals that gas-adsorption device 4 entirely loses its gas adsorption ability while being treated in the atmosphere.

### INDUSTRIAL APPLICABILITY

As described above, according to the present disclosure, even when the gaseous components in the covering material contain water vapor, the water vapor is fully reduced before reaching the gas adsorber. As a result, the gas adsorber receives non-condensable gas and can sufficiently demonstrate its ability. As another advantage, the gas adsorber does not contain any environmental load substance.

Therefore, the present disclosure is applicable to buildings that are expected to maintain high insulation performance for a long period of time in hot and humid climatic regions. The present disclosure can also be used under hot and humid conditions such as bathes, thereby greatly contributing to energy saving.

### REFERENCE MARKS IN THE DRAWINGS

- 1: filter
- 2: material with a relatively high melting point
- 3: material with a relatively low melting point
- 4: gas-adsorption device
- 5: gas adsorber
- 6: low-gas-permeable container
- 7: sealing glass
- 8: vacuum insulation material
- 9: covering material
- 10: core material
- 11: water adsorber

## Claims

1. A filter comprising:
a primary structure comprising a first material;
a secondary structure comprising a second material with a lower melting point than a melting point of the first material; and
voids.

2. The filter according to claim 1, wherein at least one of the first material and the second material is ceramic.

3. The filter according to claim 1 or 2, wherein the second material contains at least one of silicon oxide, bismuth oxide, and boron oxide.

4. A gas-adsorption device comprising:
a gas adsorber;
a low-gas-permeable container; and
the filter of any one of claims 1 to 3,
wherein
the gas adsorber is located in a closed space defined by the low-gas-permeable container and the filter, and
the closed space is ventilated through the filter.

5. The gas-adsorption device according to claim 4, wherein the gas adsorber comprises copper ion-exchanged ZSM-5 zeolite.

6. A vacuum insulation material comprising:
a core material;
a covering material;
the gas-adsorption device of claim 4 or 5; and
a water adsorber,
wherein the core material and the gas-adsorption device are sealed in the covering material under reduced pressure.
